(19)

**Europäisches Patentamt**
**European Patent Office**
**Office européen des brevets**

(11) **EP 2 747 178 A1**

(12) **EUROPEAN PATENT APPLICATION**

(43) Date of publication:
**25.06.2014 Bulletin 2014/26**

(51) Int Cl.:
*H01M 4/587* [(2010.01)]   *H01M 10/0525* [(2010.01)]
*H01M 4/133* [(2010.01)]   *H01M 4/1393* [(2010.01)]
*H01M 4/62* [(2006.01)]   *H01M 4/02* [(2006.01)]
*F02N 11/08* [(2006.01)]   *B60R 16/03* [(2006.01)]

(21) Application number: **13193736.9**

(22) Date of filing: **20.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.12.2012 KR 20120151250**

(71) Applicant: **Samsung SDI Co., Ltd.**
**Yongin-si, Gyeonggi-do (KR)**

(72) Inventors:
• **Park, Sun-Il**
  **Gyeonggi-do (KR)**
• **Sheem, Kyeu-Yoon**
  **Gyeonggi-do (KR)**
• **Kim, Young-Kee**
  **Gyeonggi-do (KR)**

(74) Representative: **Taor, Simon Edward William et al**
**Venner Shipley LLP**
**200 Aldersgate**
**London EC1A 4HD (GB)**

(54) **Negative active material for rechargeable lithium battery, negative electrode and rechargeable lithium battery including same**

(57)    The application describes a negative active material for a rechargeable lithium battery that includes amorphous carbon, wherein the amorphous carbon is characterized through a relatively larger average lattice distance (doo2) than graphite and a given range of XRD spectrum R (=B/A) values. This amorphous carbon is obtained by heating an amorphous carbon precursor (such as SC1) at a temperature comprised between 400°C and 800°C. The application also mentions a positive active material mixing LiCoO2 and activated carbon as well as the use of the obtained lithium ion battery in the Integrated Starter and Generator (ISG) of a vehicle.

FIG. 2

**Description**

This disclosure relates to a negative active material for a rechargeable lithium battery, and a rechargeable lithium battery including the same.

Recently, as various portable devices have been used due to rapid development in the information/communication industry, various types of batteries as an energy source for these portable devices have been used. In particular, rechargeable batteries have been increasingly demanded as the energy source for portable devices. Rechargeable batteries with high energy density and high voltage have been widely used in commercial applications.

In general, rechargeable lithium batteries generate energy by intercalating and deintercalating lithium ions during charge and discharge. The rechargeable lithium battery includes a negative electrode including a negative active material being capable of intercalating and deintercalating lithium, a positive electrode including a positive active material being capable of intercalating and deintercalating lithium, a separator, and an electrolyte including an organic solvent.

Recently, rechargeable batteries capable of being applied to an ISG (Integrated Starter & Generator) system used for a vehicle engine have been actively researched.

An ISG system is a system integrating a power generator and a motor. Specifically, an ISG system is an engine control system that stops an engine when the engine runs at idle for a predetermined time but restarts when a brake pedal is released or when an accelerator pedal is depressed, that is, performs an Idle Stop & Go function.

Among the rechargeable batteries that may be applied to an ISG system, an absorbed glass mat (AGM) battery has a great volume compared with its capacity but has a drawback of deteriorating cycle-life due to repeated charges and discharges.

Accordingly, a rechargeable lithium battery having a small volume and great energy density is considered for the ISG system. Furthermore, the charge and discharge of the rechargeable battery should occur at high charge and discharge rates (C-rate) to be applied to an ISG system. Therefore, research on a rechargeable lithium battery having a low self-discharge rate as well as a high charge and discharge rate is required.

Some embodiments provide a negative active material for a rechargeable lithium battery having excellent cycle-life characteristics at a high charge and discharge rate, and storage characteristics at a low temperature.

Some embodiments provide a rechargeable lithium battery including the negative active material.

Some embodiments provide a negative active material for a rechargeable lithium battery, that includes amorphous carbon, wherein the amorphous carbon has an R value of a (002) peak ranging from about 10 to about 50 at $2\theta$ of about 13° to about 35° in an X-ray diffraction (XRD) analysis using a CuK$\alpha$ ray and an average lattice distance (d002) of about 0.33 to about 0.40 nm, wherein the (002) peak has a W shape having a first recess portion and a second recess portion, and the R value is obtained by the following Equation 1.

$$\text{Equation 1}$$

$$R = B/A$$

In the above Equation 1, B is the height of a highest point of the (002) peak, and A is the height at a crossing point between a straight line indicating B and a tangent line connecting the lowest point of a first recess portion with the lowest point of a second recess portion.

The R value may range from about 15 to about 40.

The amorphous carbon may have an average particle diameter ($d_{50}$) of about 5 $\mu$m to about 15 $\mu$m.

Some embodiments provide a rechargeable lithium battery that includes a negative electrode including the negative active material, a positive electrode including a positive active material layer including a positive active material, a separator interposed between the positive and negative electrodes, and an electrolyte.

In some embodiments, the positive active material layer may include a carbon material.

In some embodiments, the carbon material may include activated carbon.

In some embodiments, the carbon material may be included in an amount of about 3 wt% to about 12 wt% based on the total amount of the positive active material layer.

In some embodiments, the carbon material may have a specific surface area of about 1000 $m^2$/g to about 2500 m2/g, and in some embodiments about 1200 $m^2$/g to about 2000 $m^2$/g.

In some embodiments, the carbon material may have benzene adsorption of about 38 wt% to about 85 wt%, and in some embodiments, about 40 wt% to about 75 wt%.

In some embodiments, the rechargeable lithium battery may be applicable to ISG (Idle Stop & Go).

According to an aspect of the invention, there is provided a negative active material for a rechargeable lithium battery as set out in claim 1. Preferred features of this aspect are set out in claims 2 to 3.

According to an aspect of the invention, there is provided a rechargeable lithium battery as set out in claim 4. Preferred features of this aspect are set out in claims 5 to 12.

According to an aspect of the invention, there is provided a Integrated Starter & Generator as set out in claim 13.

The present embodiments may afford a rechargeable lithium battery having excellent cycle-life characteristics, cycle-life characteristics at a high rate, and storage characteristics at a low temperature.

FIG. 1 is a schematic view showing a rechargeable lithium battery according to one embodiment.

FIG. 2 is a graph showing the X-ray diffraction (XRD) pattern of the hard carbon.

FIG. 3 is a graph showing the remained capacity (%) of the rechargeable lithium battery at a 1000th discharge capacity (10C/10C) relative to initial discharge capacity depending on an R change after 1000 times of repeatedly charging the rechargeable lithium battery at a current of 15 A up to 4.2 V and discharging it at a current of 15 A down to 2.0 V.

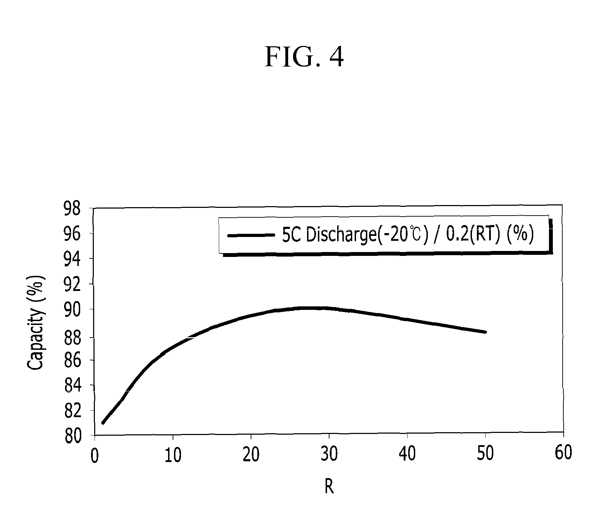

FIG. 4 is a graph showing the remained capacity (%) of the rechargeable lithium battery depending on R change in value after charging the rechargeable lithium battery at room temperature of 25 °C and a current of 0.3 A and discharging it at -20 °C at a current of 7.5 A (5C/0.2C).

Exemplary embodiments will hereinafter be described in detail. However, these embodiments are exemplary, and embodiments of the present invention arenot limited thereto.

Some embodiments provide a negative active material for a rechargeable lithium battery includes amorphous carbon. In some embodiments, the amorphous carbon may generally have a relatively larger average lattice distance (doo2) than graphite. In some embodiments, the amorphous carbon may have an average lattice distance (doo2) of about 0.33 nm to about 0.40 nm, and in some embodiments, about 0.335 nm to about 0.350 nm. When the amorphous carbon has an average lattice distance (doo2) within the range, there may be cavities between the areas in which the crystalline parts and the amorphous parts are mixed or loosely tangled areas which are not crysallized inner of the amorphous carbon. Accordingly, lithium ions entering the carbon-based material are clustered or adsorbed in the cavity while diffusing between the crystalline parts.

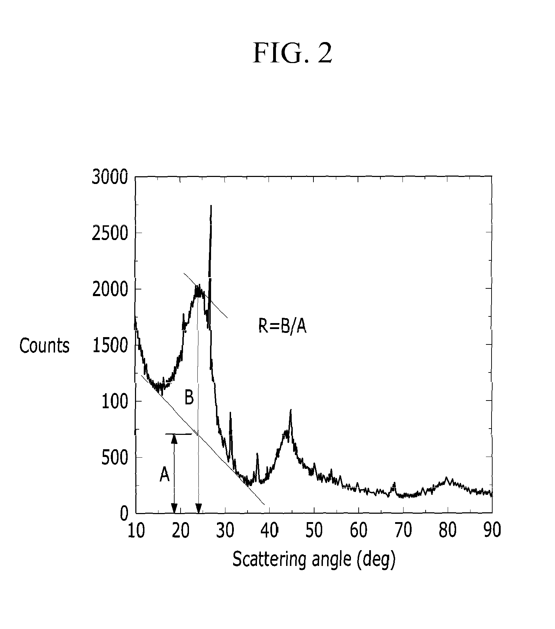

In addition, the amorphous carbon has a value indicative of an internal pore volume, an R value, ranging from about 10 to 50, and in some embodiments, about 15 to 40. For example, the R value may influence X-ray diffraction (XRD) using a CuKα ray as illustrated referring to FIG. 2.

FIG. 2 is a graph showing the X-ray diffraction (XRD) pattern using a CuKα ray of hard carbon suggested in Dahn's article (T.Zheng, W. Zing and J.R. Dahn, Carbon, 1501-1507,1996).

As shown in FIG. 2, the R value is calculated as B relative to A (R=B/A) at a W-shaped 002 peak found at 2θ of 13° to 35° in the X-ray diffraction (XRD) analysis. In some embodiments, the R value may be obtained by the following Equation 1.

$$\text{Equation 1}$$

$$R = B/A$$

In the above Equation 1, B is a height at the highest point of the (002) peak, and A is a height at a crossing point between a vertical straight line to B and a tangent line connecting the lowest point of a first recess portion of the (002) peak with the lowest point of a second recess portion of the (002) peak.

It will be appreciated that the (002) peak as a W shape, with first and second recesses (i.e. troughs) either side of a highest point. The first and second recesses (i.e. troughs) and the highest point therefore are inflection points associated with the (002) peak. Hence, the A is a height at a crossing point between a straight vertical line from zero to B and a tangent line connecting one lower inflection of the W shaped (002) peak with the other lower point of the W shaped (002) peak.

In some embodiments, the R value may be obtained by measuring the crystallinity degree of amorphous carbon suggested in Dahn's article (Carbon, 1997, vol. 35, pp 325-830) and may be used to predict an internal pore volume that is immeasurable from an average lattice distance (d002). When amorphous carbon has an R value within the range, the amorphous carbon internally includes pores in an atomic level beside a space among lattices and may secure low temperature high power or high charge of a rechargeable lithium battery.

When the amorphous carbon has an R value of a (002) peak ranging from about 10 to 50 at 2θ of 13° to 35° in an X-ray diffraction (XRD) analysis using a CuKα ray and an average lattice distance (doo2) ranging from 0.33 to 0.40 nm, a space among lattice or internal pore volume therein plays a role of passing or storing lithium ions. Accordingly, the amorphous carbon may accomplish excellent cycle-life characteristics, cycle-life characteristics at a high rate, and storage characteristics at a low temperature.

In some embodiments, the amorphous carbon may have an average particle diameter ($d_{50}$) of about 5 μm to about 15 μm, and in some embodiments, about 6 μm to about 12 μm. When the amorphous carbon has an average particle diameter ($d_{50}$) within the range and is mixed with graphite, the amorphous carbon may have appropriate pores in a negative active material composition, which produce many activated sites for passing or storing lithium ions connecting crystalline parts, and accordingly decrease contact resistance and accomplish a rapid storage characteristic and low temperature high power.

Another embodiment provides a method of preparing the negative active material for a rechargeable lithium battery that includes preparing an amorphous carbon precursor and firing the amorphous carbon precursor at a temperature of about 350 °C to 900 °C. In some embodiments, the amorphous carbon precursor may be cokes, but embodiments of the present invention are not limited thereto.

In some embodiments, the negative active material includes an appropriate number of pores and paths and may secure excellent storage characteristic as well as high input and output characteristics. In addition, when the amorphous carbon precursor is heat-treated within the temperature range, the amorphous carbon may have an optimal average lattice distance (doo2) and crystalline degree (R), and may thus secure excellent cycle-life characteristics at a high rate, rate capability, and capacity retention characteristics.

According to yet another embodiment, a rechargeable lithium battery that includes a negative electrode including the negative active material, a positive electrode including a positive active material layer including a positive active material, a separator interposed between the positive and negative electrodes, and an electrolyte is provided.

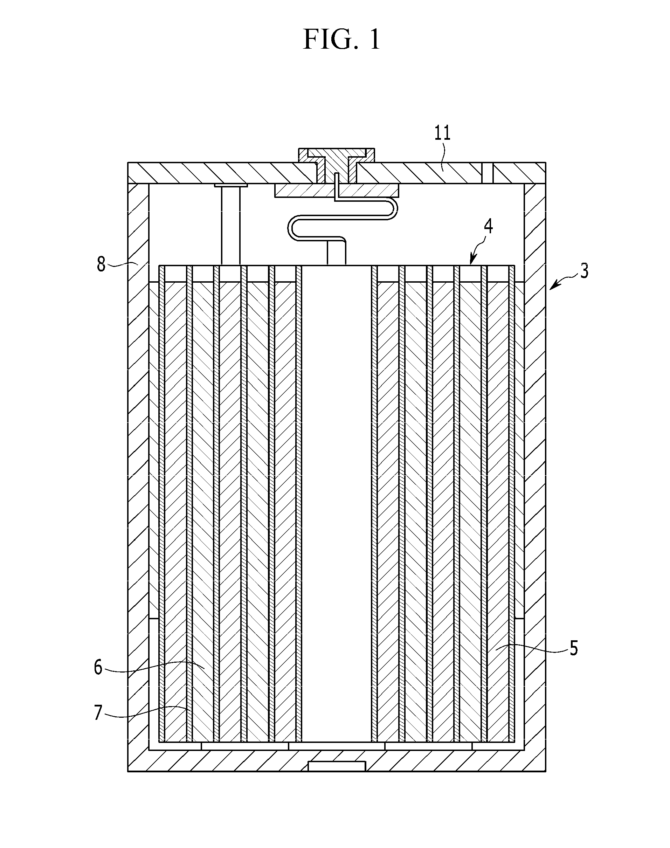

Hereinafter, a rechargeable lithium battery including the negative active material is described referring to FIG. 1.

FIG. 1 is a schematic view showing a rechargeable lithium battery according to one embodiment.

Referring to FIG. 1, the rechargeable lithium battery 3 is a prismatic battery that includes an electrode assembly 4 including a positive electrode 5, a negative electrode 6, a separator 7 interposed between the positive electrode 5 and the negative electrode 6, a battery case 8, an electrolyte solution injected through the upper part of the battery case 8, and a cap plate 11 sealing the battery. The rechargeable lithium battery according to embodiments of the present invention arelimited to a prismatic shape, but may have a cylindrical, coin-type, or pouch shape.

In some embodiments, the negative electrode includes a negative current collector and a negative active material layer disposed on the negative current collector.

In some embodiments, the negative current collector may be a copper foil.

In some embodiments, the negative active material layer includes a negative active material, a binder, and optionally a conductive material.

In some embodiments, the negative active material includes the amorphous carbon-based material.

In some embodiments, the negative active material layer for a rechargeable lithium battery may further include a binder. The binder improves binding properties of the negative active material such as amorphous carbon and the like to itself and to a current collector. Examples of the binder includes one selected from polyvinyl alcohol, carboxylmethylcellulose, hydroxyethylcellulose, hydroxypropylcellulose, hydroxypropylmethylcellulose, polyvinylidene fluoride, polytetrafluoroethylene, polyethylene, polypropylene, a styrene-butadiene rubber, polybutadiene, a butyl rubber, a fluorine rubber, polyethylene oxide, poly(meth) acrylic acid and a salt thereof, polyvinylpyrrolidone, polyepichlorohydrine, polyphosphazene, polyacrylonitrile, polystyrene, polyvinylpyridine, chlorosulfonated polyethylene, a latex, a polyester resin, an acrylic resin, a phenol resin, an epoxy resin, a polymer of propylene and a C2 to C8 olefin, a copolymer of (meth)acrylic acid and (meth)acrylic acid alkylester, and a combination thereof, but embodiments of the present invention are not limited thereto.

The conductive material provides an electrode with conductivity, and includes any electrically-conductive material unless it causes a chemical change. Examples of the conductive material include a carbon-based material such as natural graphite, artificial graphite, carbon black, acetylene black (AB), ketjen black, a carbon fiber, and the like; a metal-based material of a metal powder or a metal fiber of copper, nickel, aluminum, silver, and the like; a conductive polymer of a polyphenylene derivative; or a mixture thereof.

In some embodiments, the positive electrode includes a current collector and a positive active material layer on the current collector. In some embodiments, the positive active material layer includes a positive active material, a binder, and a conductive material.

In some embodiments, the current collector may be Al (aluminum), but embodiments of the present invention are not limited thereto.

In some embodiments, the positive active material layer includes a carbon material, and the carbon material may include activated carbon. The carbon material as a positive active material may realize high input and output characteristics of a high-capacity rechargeable lithium battery. In some embodiments, the carbon material may be included in an amount of about 3 wt% to about 12 wt%, and in some embodiments, about 5 wt% to about 10 wt% based on the total amount of the positive active material layer, which may improve high input and output characteristics.

In some embodiments, the carbon material may have a specific surface area of about 1000 $m^2/g$ to about 2500 $m^2/g$, and in some embodiments, about 1200 $m^2/g$ to about 2000 $m^2/g$. When the carbon material has a specific surface area within the range, the positive active material layer has more activation sites and thus promotes high input and output and excellent cycle-life characteristics at a high rate of a rechargeable lithium battery.

In some embodiments, the carbon material may have benzene adsorption of about 38 wt% to about 85 wt%, and in some embodiments, about 40 wt% to about 75 wt%. The carbon material may have varied benzene adsorption depending on internal pore structure and distribution. When the carbon material having benzene adsorption within the range is included in a positive active material layer, the positive active material layer has pores with an optimal volume for passing or storing the lithium ions and thus may secure excellent cycle-life characteristics at a high rate, rate capability, and capacity retention characteristics. The rechargeable lithium battery may be applicable to an ISG (Integrated Starter & Generator) system.

In some embodiments, the positive active material may further include compounds (lithiated intercalation compounds) that reversibly intercalate and deintercalate lithium ions. In some embodiments, the positive active material may include a composite oxide including a metal of cobalt, manganese, nickel, or a combination thereof, and lithium, and in some embodiments, a compound represented by the following chemical formulae:

$Li_aA_{1-b}B^1_bD^1_2$ $(0.90 \le a \le 1.8$ and $0 \le b \le 0.5)$;
$Li_aE_{1-b}B^1_bO_{2-c}D^1_c$ $(0.90 \le a \le 1.8, 0 \le b \le 0.5,$ and $0 \le c \le 0.05)$;
$LiE_{2-b}B^1_bO_{4-c}D^1_c$ $(0 \le b \le 0.5$ and $0 \le c \le 0.05)$;
$Li_aNi_{1-b-c}Co_bB^1_cD^1_\alpha$ $(0.90 \le a \le 1.8, 0 \le b \le 0.5, 0 \le c \le 0.05,$ and $0 < \alpha \le 2)$;
$Li_aNi_{1-b-c}Co_bB^1_cO_{2-\alpha}F^1_\alpha$ $(0.90 \le a \le 1.8, 0 \le b \le 0.5, 0 \le c \le 0.05,$ and $0 < \alpha < 2)$;
$Li_aNi_{1-b-c}Co_bB^1_cO_{2-\alpha}F^1_2$ $(0.90 \le a \le 1.8, 0 \le b \le 0.5, 0 \le c \le 0.05,$ and $0 < \alpha < 2)$;
$Li_aNi_{1-b-c}Mn_bB^1_cD^1_\alpha$ $(0.90 \le a \le 1.8, 0 \le b \le 0.5, 0 \le c \le 0.05,$ and $0 < \alpha \le 2)$;
$Li_aNi_{1-b-c}Mn_bB^1_cO_{2-\alpha}F^1_\alpha$ $(0.90 \le a \le 1.8, 0 \le b \le 0.5, 0 \le c \le 0.05,$ and $0 < \alpha < 2)$;
$Li_aNi_{1-b-c}Mn_bB^1_cO_{2-\alpha}F^1_2$ $(0.90 \le a \le 1.8, 0 \le b \le 0.5, 0 \le c \le 0.05,$ and $0 < \alpha < 2)$;
$Li_aNi_bE_cG_dO_2$ $(0.90 \le a \le 1.8, 0 \le b \le 0.9, 0 \le c \le 0.5,$ and $0.001 \le d \le 0.1)$;
$Li_aNi_bCo_cMn_dGeO_2$ $(0.90 \le a \le 1.8, 0 \le b \le 0.9, 0 \le c \le 0.5, 0 \le d \le 0.5,$ and $0.001 \le e \le 0.1)$;
$Li_aNiG_bO_2$ $(0.90 \le a \le 1.8$ and $0.001 \le b \le 0.1)$;
$Li_aCoG_bO_2$ $(0.90 \le a \le 1.8$ and $0.001 \le b \le 0.1)$;
$Li_aMnG_bO_2$ $(0.90 \le a \le 1.8$ and $0.001 \le b \le 0.1)$;
$Li_aMn_2G_bO_4$ $(0.90 \le a \le 1.8$ and $0.001 \le b \le 0.1)$;
$QO_2$; $QS_2$; $LiQS_2$; $V_2O_5$; $LiV_2O_5$; $LiI^1O_2$; $LiNiVO_4$; $Li_{(3-f)}J_2(PO_4)_3$ $(0 \le f \le 2)$;
$Lic_{(3-f)}Fe_2(PO_4)_3$ $(0 \le f \le 2)$; and $LiFePO_4$.

In the above chemical formulae, A may be Ni, Co, Mn, or a combination thereof; $B_1$ may be Al, Ni, Co, Mn, Cr, Fe, Mg, Sr, V, a rare earth element, or a combination thereof; $D_1$ may be O (oxygen), F (fluorine), S (sulfur), P (phosphorus), or a combination thereof; E may be Co, Mn, or a combination thereof; $F_1$ may be F (fluorine), S (sulfur), P (phosphorus), or a combination thereof; G may be Al, Cr, Mn, Fe, Mg, La, Ce, Sr, V, or a combination thereof; Q may be Ti, Mo, Mn, or a combination thereof; $I_1$ is Cr, V, Fe, Sc, Y, or a combination thereof; and J may be V, Cr, Mn, Co, Ni, Cu, or a combination thereof.

In some embodiments, the compounds may have a coating layer on the surface or may be mixed with compounds having a coating layer. In some embodiments, the coating layer may include at least one coating element compound selected from an oxide of a coating element, a hydroxide of a coating element, an oxyhydroxide of a coating element, an oxycarbonate of a coating element, and a hydroxyl carbonate of a coating element. The compounds for a coating layer may be amorphous or crystalline. In some embodiments, the coating element for a coating layer may include Mg, Al, Co, K, Na, Ca, Si, Ti, V, Sn, Ge, Ga, B, As, Zr, or a mixture thereof. In some embodiments, the coating layer may be formed in a method having no negative influence on properties of a positive active material by including these elements in the compound. For example, the method may include any coating method such as spraying, dipping, and the like, but is not illustrated in more detail, since it is well-known to those who work in the related field.

The binder improves binding properties of the positive active material particles to itself and to a current collector. Examples of the binder are the same as described above.

The conductive material improves electrical conductivity of a positive electrode and includes any electrically-conductive material unless it causes a chemical change. Examples of the conductive material are the same as described above.

In some embodiments, the negative and positive electrodes may be manufactured in a method of mixing the active material, the conductive material, and the binder in a solvent to prepare an active material composition and coating the composition on the current collector.

Such a method of manufacturing a positive electrode is well known and thus is not described in detail in the present specification. In some embodiments, the solvent may include N-methylpyrrolidone and the like, but embodiments of the present invention are not limited thereto.

In some embodiments, the electrolyte solution may include a non-aqueous organic solvent and a lithium salt.

The non-aqueous organic solvent plays a role of transferring ions taking part in the electrochemical reaction of a battery. In some embodiments, the non-aqueous organic solvent may include a carbonate-based, ester-based, ether-based, ketone-based, alcohol-based, or aprotic solvent.

In some embodiments, the carbonate-based solvent may include, for example, dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like.

Particularly, when the linear carbonate compounds and cyclic carbonate compounds are mixed, an organic solvent having a high dielectric constant and low viscosity may be provided. In some embodiments, the cyclic carbonate and the linear carbonate may be mixed together in a volume ratio ranging from about 1:1 to about 1:9.

In some embodiments, the ester-based solvent may include n-methylacetate, n-ethylacetate, n-propylacetate, dimethylacetate, methylpropionate, ethylpropionate, $\gamma$-butyrolactone, decanolide, valerolactone, mevalonolactone, caprolactone, or the like. In some embodiments, the ether-based solvent may include dibutyl ether, tetraglyme, diglyme, dimethoxyethane, 2-methyltetrahydrofuran, tetrahydrofuran, and the like, and the ketone-based solvent may include cyclohexanone, or the like. In some embodiments, the alcohol-based solvent may include ethyl alcohol, isopropyl alcohol, or the like.

In some embodiments, the non-aqueous organic solvent may be used singularly or in a mixture. When the organic solvent is used in a mixture, the mixing ratio can be controlled in accordance with a desirable battery performance.

In some embodiments, the non-aqueous electrolyte may further include an overcharge inhibitor additive such as ethylene carbonate, pyrocarbonate, or the like.

In some embodiments, the lithium salt is dissolved in an organic solvent, supplies lithium ions in a battery, basically operates the rechargeable lithium battery, and improves lithium ion transportation between positive and negative electrodes therein.

In some embodiments, the lithium salt may include $LiPF_6$, $LiBF_4$, $LiSbF_6$, $LiAsF_6$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$, (where x and y are natural numbers of 1 to 20, respectively), LiCl, LiI, $LiB(C_2O_4)_2$ (lithium bis(oxalato) borate), or a combination thereof as a supporting electrolytic salt.

In some embodiments, the lithium salt may be used in a concentration ranging from about 0.1 M to about 2.0 M. When the lithium salt is included within the above concentration range, an electrolyte may have excellent performance and lithium ion mobility due to optimal electrolyte conductivity and viscosity.

The separator may be a monolayer or a multilayer, and for example, may be made of polyethylene, polypropylene, polyvinylidene fluoride, or a combination thereof.

Hereinafter, the following examples illustrate the present embodiments in more detail. These examples, however, should not in any sense be interpreted as limiting the scope of the present embodiments.

The parts of present embodiments that are not specifically described may be sufficiently understood by a person having ordinary skill in this art.

Example 1

Fabrication of Negative Electrode

An amorphous carbon precursor ($SC_1$, GS Energy Co., Seoul, Korea) was heated at 800 °C, preparing amorphous carbon.

The amorphous carbon, acetylene black (AB) (Electrochemical Industries Ltd., Haifa, Israel) as a conductive material, and polyvinylidene fluoride (PVDF) as a binder in a weight ratio of 85:5:10 were dispersed in an N-methylpyrrolidone solvent, preparing a negative active material slurry. Then, the negative active material slurry was coated on a Cu current collector and dried and compressed, fabricating a negative electrode. Fabrication of Positive Electrode

LiCoO2 having an average particle diameter ($d_{50}$) of 5 $\mu$m as a positive active material, acetylene black (AB) as a conductive material (Electrochemical Industries Ltd.), polyvinylidene fluoride (PVDF) as a binder, and activated carbon ($YP_{50}$, Kuraray Chemical Co., Ltd., Osaka, Japan, specific surface area: 1500 $m^2$/g, benzene adsorption: 40% ) as a carbon material additive were mixed in a weight ratio of 85:4:6:5 and then, dispersed in N-methylpyrrolidone, preparing a positive active material slurry.

The positive active material slurry was coated on an Al current collector and then dried and compressed, fabricating a positive electrode.

Electrolyte Solution

An electrolyte solution was prepared by mixing ethylene carbonate (EC), ethylmethyl carbonate (EMC), and dimethyl carbonate (DMC) in a volume ratio of 3:3:4 and dissolving 1.15 M $LiPF_6$ in the mixed solution.

Separator

A 25 $\mu$m-thick polyethylene microporous film was used as a separator.

Fabrication of Rechargeable Lithium Battery Cell

The positive and negative electrodes and the polyethylene separator were spirally wound into a jelly roll, the jelly roll was placed in an 18650-sized case, the electrolyte solution was injected therein, and the product was compressed, fabricating a cylindrical rechargeable lithium battery cell.

Example 2

A rechargeable lithium battery cell was fabricating according to the same method as Example 1, except for heating the amorphous carbon precursor at 600 °C to prepare amorphous carbon.

Example 3

A rechargeable lithium battery cell was fabricating according to the same method as Example 1, except for preparing amorphous carbon by firing an amorphous carbon precursor at 400 °C.

Comparative Example 1

A rechargeable lithium battery cell was fabricated according to the same method as Example 1, except for preparing amorphous carbon by heating the amorphous carbon precursor at 1100 °C.

Comparative Example 2

A rechargeable lithium battery cell was fabricated according to the same method as Example 1, except for fabricating amorphous carbon by heating the amorphous carbon precursor at 1500 °C.

Evaluation 1: Analysis of Negative Active Material

The negative active materials according to Examples 1 to 3 and Comparative Examples 1 and 2 were evaluated regarding XRD analysis using a CuK$\alpha$ ray, average lattice distance (d002), and average particle diameter ($d_{50}$). The results are provided in the following Table 1. Furthermore, the R value of a (002) peak was an R value of a (002) peak shown at 2$\theta$ of 13° to 35° in an X-ray diffraction (XRD) analysis.

Table 1

|  | R value of (002) peak | Average lattice distance ($d_{002}$) (nm) | Average particle diameter ($d_{50}$) ($\mu$m) |
|---|---|---|---|
| Example 1 | 26.5 | 0.341 | 10.5 |
| Example 2 | 10 | 0.345 | 10 |
| Example 3 | 50 | 0.338 | 9 |
| Comparative Example 1 | 1.88 | 0.348 | 11.3 |
| Comparative Example 2 | 5.7 | 0.346 | 11.8 |

Evaluation 2: Initial Capacity of Rechargeable Lithium Battery Cell

The rechargeable lithium battery cells according to Examples 1 to 3 and Comparative Examples 1 and 2 were constant current charged at a current of 0.3 A, and the charge was ended at a voltage of 4.2 V. In addition, the rechargeable lithium battery cells were constant current discharged at a current of 0.3 A, and the discharge was ended at a voltage of 2.0 V. Then, the rechargeable lithium battery cells were measured regarding capacity and considered as initial discharge capacity. The results are provided in the following Table 2.

Evaluation 3: Cycle-life Characteristics of Rechargeable Lithium Battery Cell

The rechargeable lithium battery cells according to Examples 1 to 3 and Comparative Examples 1 to 2 were charged at 10C to 4.2 V and discharged at 10C to 2.0 V 1000 times, and then analyzed regarding capacity retention (%). The results are provided in the following Table 2. The capacity retention (%) was calculated as a percentage of the 1000th discharge capacity related to initial discharge capacity.

Table 2

|  | Initial discharge capacity (mAh) | Capacity retention (%) |
|---|---|---|
| Example 1 | 1395 | 97 |
| Example 2 | 1400 | 94 |
| Example 3 | 1380 | 95 |
| Comparative Example 1 | 1350 | 81 |
| Comparative Example 2 | 1325 | 80 |

Referring to Table 2, the rechargeable lithium battery cells according to Examples 1 to 3 had better cycle-life characteristics than the ones according to Comparative Examples 1 and 2.

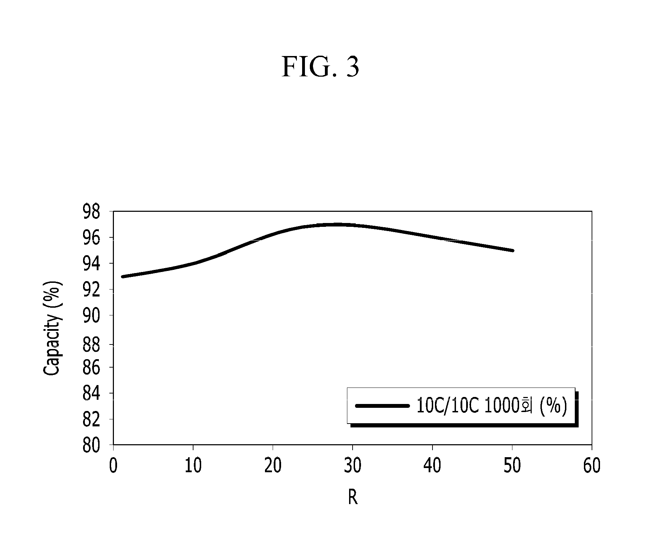

In addition, referring to FIG. 3, when R was in a range of 15 to 40 (Example 1), the rechargeable lithium battery cell had an optimal cycle-life characteristic.

Evaluation 4: Cycle-life Characteristics at High Rate of Rechargeable Lithium Battery Cell

The rechargeable lithium battery cells according to Examples 1 to 3 and Comparative Examples 1 and 2 were constant current charged at a current of 0.3 A and the charge was ended with a voltage of 4.2V, and then discharged at a current of 1.5A and 1C to 2.0V and measured regarding capacity. Then, the rechargeable lithium battery cells were respectively discharged at a current of 15 A and 10C, a current of 45A and 30C, and a current of 75 A and 50C to 2.0V and measured regarding capacities. Each capacity related to the former capacity was calculated as capacity retention. The results are provided in the following Table 3.

Table 3

|  | Capacity retention (10C/1C) (%) | Capacity retention (30C/1C) (%) | Capacity retention (50C/1C) (%) |
|---|---|---|---|
| Example 1 | 99 | 97 | 93 |
| Example 2 | 99 | 96 | 91.5 |
| Example 3 | 98 | 96 | 92 |
| Comparative Example 1 | 95 | 92 | 90 |
| Comparative Example 2 | 94 | 90 | 83 |

Referring to Table 3, the rechargeable lithium battery cells according to Examples 1 to 3 had better cycle-life characteristics at a high rate than the ones according to Comparative Examples 1 and 2.

Evaluation 5: Capacity Retention Characteristics of Rechargeable Lithium Battery Cell

The rechargeable lithium battery cells according to Examples 1 to 3 and Comparative Examples 1 and 2 were charged at a current of 0.3 A up to a voltage of 4.2V. Then, the rechargeable lithium battery cells having a charge rate of 100 % were allowed to stand at 40 °C for 30 days and measured regarding voltage drop rate. The results are provided in the following Table 4.

Table 4

|  | Voltage (V) after approaching 4.2 V and being allowed to stand at 40 °C for 30 days |
|---|---|
| Example 1 | 4.10 |
| Example 2 | 3.88 |
| Example 3 | 3.9 |
| Comparative Example 1 | 3.48 |
| Comparative Example 2 | 3.41 |

Referring to Table 4, the rechargeable lithium battery cells according to Examples 1 to 3 in general had a higher voltage after being allowed to stand for 30 days, and thus had better capacity retention characteristics than the ones according to Comparative Examples 1 and 2.

Evaluation 6: Storage Characteristics at Low Temperature of Rechargeable Lithium Battery Cell

The rechargeable lithium battery cells according to Examples 1 to 3 and Comparative Examples 1 and 2 were charged at a current of 0.3 A and 0.2C at room temperature of 25 °C and discharged at a current of 7.5 A and 5C at -20 °C, and then measured regarding capacity retention. The results are provided in the following Table 5.
The capacity retention (%) was calculated as a percentage of discharge capacity at 5C and -20 °C related to charge capacity at 0.2C.

Table 5

|  | Capacity retention (%) |
|---|---|
| Example 1 | 90 |
| Example 2 | 87 |
| Example 3 | 88 |
| Comparative Example 1 | 71 |
| Comparative Example 2 | 65 |

Referring to Table 5, the rechargeable lithium battery cells according to Examples 1 to 3 in general had better storage characteristics at a low temperature than the ones according to Comparative Examples 1 and 2.
As discussed, embodiments of the invention provide a negative active material for a rechargeable lithium battery, comprising amorphous carbon, wherein the amorphous carbon has an R value of a (002) peak ranging from about 10 to about 50 at $2\theta$ of about 13° to about 35° by an X-ray diffraction (XRD) analysis using a CuK$\alpha$ ray and an average lattice distance (doo2) of about 0.33 nm to about 0.40 nm, the (002) peak has a W shape having a first lower inflection point, a highest point, and a second lower inflection point, and the R value is obtained by the following Equation 1:

$$\text{Equation 1}$$

$$R = B/A$$

wherein,

B is a height of the highest point of the (002) peak, and

A is a height at a crossing point between a straight vertical line from zero to B and a tangent line connecting the first lower inflection point and the second lower inflection point.

In the present disclosure, the terms "Example," and "Comparative Example" are used arbitrarily to simply identify a particular example or experimentation and should not be interpreted as admission of prior art. While this disclosure has been described in connection with what is presently considered to be practical exemplary embodiments, it is to be understood that the present embodiments is not limited to the disclosed embodiments, but, on the contrary, is intended to cover various modifications and equivalent arrangements included within the scope of the appended claims.

## Claims

1. A negative active material for a rechargeable lithium battery, comprising amorphous carbon,
   wherein the amorphous carbon has an R value of a (002) peak ranging from about 10 to about 50 at 2θ of about 13° to about 35° by an X-ray diffraction (XRD) analysis using a CuKα ray and an average lattice distance (d002) of about 0.33 nm to about 0.40 nm,
   the (002) peak has a W shape having a first lower inflection point, a highest point, and a second lower inflection point, and
   the R value is obtained by the following Equation 1:

$$\text{Equation 1}$$
$$R = B/A$$

   wherein,

   B is a height of the highest point of the (002) peak, and
   A is a height at a crossing point between a straight vertical line from zero to B and a tangent line connecting the first lower inflection point and the second lower inflection point.

2. The negative active material of claim 1, wherein the R value ranges from about 15 to about 40.

3. The negative active material of claim 1, wherein the amorphous carbon has an average particle diameter ($d_{50}$) of about 5 $\mu$m to about 15 um, optionally from about 6 $\mu$m to about 12 $\mu$m.

4. A rechargeable lithium battery, comprising:

   a negative electrode comprising the negative active material according to any one of claims 1 to 3;
   a positive electrode including a positive active material layer comprising a positive active material;
   a separator interposed between the positive electrode and the negative electrode; and
   an electrolyte.

5. The rechargeable lithium battery of claim 4, wherein the positive active material layer comprises a carbon material.

6. The rechargeable lithium battery of claim 5, wherein the carbon material comprises activated carbon.

7. The rechargeable lithium battery of claim 5 or 6, wherein the carbon material is included in an amount of about 3 wt% to about 12 wt% based on the total amount of the positive active material layer, optionally in an amount from about 5 wt% to about 10 wt% based on the total amount of the positive active material layer.

8. The rechargeable lithium battery of any one of claims 5 to 7, wherein the carbon material has a specific surface area of about 1000 $m^2$/g to about 2500 $m^2$/g.

9. The rechargeable lithium battery of any one of claims 5 to 8, wherein the carbon material has a specific surface area of about 1200 $m^2$/g to about 2000 $m^2$/g.

10. The rechargeable lithium battery of any one of claims 5 to 9, wherein the carbon material has benzene adsorption of about 38 wt% to about 85 wt%.

**11.** The rechargeable lithium battery of any one of claims 5 to 10, wherein the carbon material has benzene adsorption of about 40 wt% to about 75 wt%.

**12.** The rechargeable lithium battery of any one of claims 4 to 11, wherein the rechargeable lithium battery is applicable to a rechargeable lithium battery for ISG (Integrated Starter & Generator).

**13.** An Integrated Starter & Generator comprising a rechargeable lithium battery according to any one of claims 4 to 12.

# FIG. 1

# FIG. 2

FIG. 3

# FIG. 4

Europäisches Patentamt

European Patent Office

Office européen des brevets

## EUROPEAN SEARCH REPORT

Application Number

EP 13 19 3736

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/165465 A1 (KIM TAE-KEUN [KR] ET AL) 7 July 2011 (2011-07-07) | 1-5,12 | INV.<br>H01M4/587 |
| Y | * paragraphs [0003], [0018], [0049] - [0051], [0054] - [0056], [0059], [0068], [0070], [0089] - [0091] * | 6-11,13 | H01M10/0525<br><br>ADD.<br>H01M4/133 |
| X | ----- <br>US 2007/154810 A1 (KIM HYUN-SEOK [KR] ET AL) 5 July 2007 (2007-07-05)<br>* paragraphs [0002], [0012]; claims 16, 17, 18 * | 1,2,4 | H01M4/1393<br>H01M4/62<br>H01M4/02<br>F02N11/08<br>B60R16/03 |
| X | ----- <br>WO 2011/162529 A2 (GS CALTEX CORP [KR]; SEUNG DO YOUNG [KR]; LEE SANG ICK [KR]; JEON TAE) 29 December 2011 (2011-12-29)<br>* abstract *<br>-& EP 2 584 633 A2 (GS CALTEX CORP [KR]) 24 April 2013 (2013-04-24)<br>* paragraphs [0001], [0059], [0065] * | 1,2,4 | |
| T | ----- <br>DAHN J R ET AL: "The "falling cards model" for the structure of microporous carbons",<br>CARBON, ELSEVIER, OXFORD, GB,<br>vol. 35, no. 6,<br>1 January 1997 (1997-01-01), pages 825-830, XP004073604,<br>ISSN: 0008-6223, DOI: 10.1016/S0008-6223(97)00037-7<br>* part "2. X-Ray Diffraction [...] of Microporous Carbon"; Figure 1(b) * | 1 | TECHNICAL FIELDS SEARCHED (IPC)<br><br>H01M<br>F02N<br>B60R |

-----

-/--

The present search report has been drawn up for all claims

| Place of search | Date of completion of the search | Examiner |
|---|---|---|
| The Hague | 6 March 2014 | Fauché, Yann |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

**EUROPEAN SEARCH REPORT**

**Application Number**

EP 13 19 3736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | ZHENG T ET AL: "Carbons prepared from coals for anodes of lithium-ion cells", CARBON, ELSEVIER, OXFORD, GB, vol. 34, no. 12, 1 January 1996 (1996-01-01), pages 1501-1507, XP004063069, ISSN: 0008-6223, DOI: 10.1016/S0008-6223(96)00098-X * part "2. Powder diffraction [...]"; Figure 2 * | 1 | |
| Y | PASQUIER A D ET AL: "Power-ion battery: bridging the gap between Li-ion and supercapacitor chemistries", JOURNAL OF POWER SOURCES, ELSEVIER SA, CH, vol. 136, no. 1, 10 September 2004 (2004-09-10), pages 160-170, XP004544528, ISSN: 0378-7753, DOI: 10.1016/J.JPOWSOUR.2004.05.023 * abstract; Tables 1, 2; parts "2.1 Cell fabrication", "4. Discussion" and "5. Conclusion" * | 6-11,13 | |
| | ----- | | TECHNICAL FIELDS SEARCHED (IPC) |
| T | Harry Marsh ET AL: "Extract from the book "Activated Carbon" (page 461)" In: Harry Marsh ET AL: "Activated Carbon", 1 January 2006 (2006-01-01), Elsevier Ltd., XP055101710, ISBN: 0080444636 pages 461-461, * paragraph "Benzene adsorption" * | 10,11 | |

-----

-/--

The present search report has been drawn up for all claims

| Place of search | Date of completion of the search | Examiner |
|---|---|---|
| The Hague | 6 March 2014 | Fauché, Yann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 19 3736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAOSONG HU ET AL: "Transient Simulation for an ISG HEV Dual-Voltage 42V/14V Power-Net System", ENERGY AND ENVIRONMENT TECHNOLOGY, 2009. ICEET '09. INTERNATIONAL CONFERENCE ON, IEEE, PISCATAWAY, NJ, USA, 16 October 2009 (2009-10-16), pages 491-496, XP031591057, ISBN: 978-0-7695-3819-8 * abstract; figure 1 * | 12,13 | |

-----

TECHNICAL FIELDS
SEARCHED     (IPC)

The present search report has been drawn up for all claims

| Place of search | Date of completion of the search | Examiner |
|---|---|---|
| The Hague | 6 March 2014 | Fauché, Yann |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 19 3736

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2014

| Patent document cited in search report | | Publication date | Patent family member(s) | | Publication date |
|---|---|---|---|---|---|
| US 2011165465 | A1 | 07-07-2011 | KR | 20110080827 A | 13-07-2011 |
| | | | US | 2011165465 A1 | 07-07-2011 |
| US 2007154810 | A1 | 05-07-2007 | CN | 1992420 A | 04-07-2007 |
| | | | US | 2007154810 A1 | 05-07-2007 |
| WO 2011162529 | A2 | 29-12-2011 | CN | 102986064 A | 20-03-2013 |
| | | | EP | 2584633 A2 | 24-04-2013 |
| | | | KR | 20110138621 A | 28-12-2011 |
| | | | US | 2013089782 A1 | 11-04-2013 |
| | | | WO | 2011162529 A2 | 29-12-2011 |
| EP 2584633 | A2 | 24-04-2013 | CN | 102986064 A | 20-03-2013 |
| | | | EP | 2584633 A2 | 24-04-2013 |
| | | | KR | 20110138621 A | 28-12-2011 |
| | | | US | 2013089782 A1 | 11-04-2013 |
| | | | WO | 2011162529 A2 | 29-12-2011 |

EPO FORM P0459

For more details about this annex : see Official Journal of the European Patent Office, No. 12/82

## REFERENCES CITED IN THE DESCRIPTION

**Non-patent literature cited in the description**

- **T.ZHENG ; W. ZING ; J.R. DAHN.** *Carbon,* 1996, 1501-1507
- *Carbon,* 1997, vol. 35, 325-830